# EUROPEAN PATENT APPLICATION

(11) **EP 4 583 327 A1**
(43) Date of publication of application: **09.07.2025**
(21) Application number: 25150055.9
(22) Date of filing: 02.01.2025
(51) Int. Cl.: H01R 35/02, H01R 13/72, H01R 31/06

(54) **DATA CABLE**

(30) Priority: 03.01.2024 CN 202420023380 U
(71) Applicant: Anker Innovations Technology Co., Ltd., Changsha, Hunan 410000 (CN)
(72) Inventor: ZHANG, Xiaoshu, Shenzhen (CN); QIAN, Jing, Shenzhen (CN)
(74) Representative: Bittner, Thomas L.

(57) **Abstract**

A data cable is disclosed, comprising: a shell having an accommodating space; a turntable in the accommodating space; a connecting wire comprising a wire harness and a connector located at one end of the wire harness, wherein the wire harness is wound on the turntable, and the wire harness is configured to drive the turntable to rotate in a first direction in response to the wire harness being extracted from the accommodating space; an elastic device located in the accommodating space, wherein two ends of the elastic device are connected to the shell and the turntable respectively, and the elastic device is configured to drive the turntable to rotate in a second direction opposite to the first direction in response to release of the extracted wire harness; and a self-locking switch located in the accommodating space, wherein the self-locking switch is configured to prevent the turntable from rotating in the second direction when the wire harness is extracted from a first position that the wire harness is completely wound on the turntable and then released, and allow the turntable to rotate in the second direction when the wire harness is extracted from a second position that the wire harness is partially wound on the turntable and then released.

## Description

### Technical field

The present application relates to the technical field of data cables.

### Background

A conventional data cable is a wire harness having connecting joints at two ends, which is relatively long, prone to tangling during use, and inconvenient to carry. Therefore, improvements are needed to at least partially solve the above problems.

### Summary

A series of simplified concepts are introduced in the summary of the present application, which will be further explained in detail in the detailed description. The summary of the present application does not means attempting to define the key and necessary technical features of the technical solutions required for protection, and even does not mean attempting to determine the protection scope of the technical solutions required for protection.

Examples of the present application provide a data cable which is easy to use and carry and an electronic device.

According to an aspect of the invention, a data cable comprises:
- a shell having an accommodating space;
- a turntable in the accommodating space;
- a connecting wire comprising a wire harness and a connector located at one end of the wire harness, wherein the wire harness is wound on the turntable, and the wire harness is configured to drive the turntable to rotate in a first direction in response to the wire harness being extracted from the accommodating space;
- an elastic device located in the accommodating space, wherein two ends of the elastic device are connected to the shell and the turntable respectively, and the elastic device is configured to drive the turntable to rotate in a second direction opposite to the first direction in response to release of the extracted wire harness; and
- a self-locking switch located in the accommodating space, wherein the self-locking switch is configured to prevent the turntable from rotating in the second direction when the wire harness is extracted from a first position that the wire harness is completely wound on the turntable and then released, and allow the turntable to rotate in the second direction when the wire harness is extracted from a second position that the wire harness is partially wound on the turntable and then released.

The turntable may comprise an annular wall and/or a plurality of clamping grooves, wherein preferably the plurality of clamping grooves may be provided circumferentially on an inner side of the annular wall. The data cable may further comprise a clamp rotatably arranged on the shell. The clamp may be configured to clamp one of the plurality of clamping grooves when the wire harness is extracted from the first position and released (preferably to prevent the turntable from rotating in the second direction) and/or to separate from the one of the plurality of clamping grooves when the wire harness is extracted and released again, preferably to allow rotation of the turntable in the second direction.

The self-locking switch in the unlocked state may be configured to control the clamp to clamp the one of the plurality of clamping grooves and/or the self-locking switch in the self-locking state may be configured to control the clamp to not clamp the one of the plurality of clamping grooves.

The self-locking switch may comprise at least one of a chute, a slider, a limit rod, and a second elastic device.

The slider may be configured to switch between an extension position of extending to outside of the chute and a storage position of being accommodated in the chute and/or the slider in the extension position may be configured to push the clamping member to clamp the one of the plurality of clamping grooves.

The slider may comprises at least one of a one-way slide, A first end of the limit rod may be connected to the shell and/or a second end of the limit rod may be located in the one-way slide and may preferably be configured to slide along the one-way slide, to switch between a first position, a second position, a third position, a fourth position sequentially.

The second elastic device may be configured to abut against the slider to push the slider to move towards the extension position. When the second end of the limit rod is in the first position, the limit rod may be configured to clamp the slide to maintain the slider in the storage position. Additionally or alternatively, when the second end of the limit rod is in the second position and the fourth position, the slider may be in the storage position. Additionally or alternatively, when the second end of the limit rod is in the third position, the slider may remain in the extension position. Additionally or alternatively, when the wire harness is extracted from the second position, the clamp may press the slider into the chute. Additionally or alternatively, when the wire harness is released after being extracted from the second position, the second elastic device may push the slider out of the chute.

The chute may arranged on the bottom shell. A side of the chute facing the clamping member may be open. Additionally or alternatively, the slider may be configured to extend to the outside of the chute through the opening.

A width of the slide may be greater than a diameter of the second end of the limit rod.

The second elastic device may be configured to push the slider to move towards the extension position. The second elastic device may be a spring.

The self-locking switch may further comprise a chute cover plate. Additionally or alternatively, the chute cover plate may be connected to a side of the chute by adhesion.

The clamp may comprise at least one of a first clamping portion, a second clamping portion, and a contact portion arranged circumferentially. The first clamping portion may be configured to clamp each of the plurality of clamping grooves. The second clamping portion may be configured to clamp the slider. The contact portion may be in contact with a slider.

When the wire harness is extracted from the second position, the annular wall may push the clamp to rotate in the first direction through the first clamping portion. Additionally or alternatively, when the wire harness is released from the second position, the contact portion may be driven by the slider to push the clamp to rotate in the second direction.

The self-locking switch may be configured to be in an unlocked state in response to being pressed and released and/or in a self-locking state in response to being pressed and released again.

The connecting wire may comprise a first connecting joint and a second connecting joint. The wire harness may comprise a first wire harness and a second wire harness, Two ends of the first wire harness may be connected to the first connecting joint and the shell respectively. Two ends of the second wire harness may be connected to the second connecting joint and the turntable respectively.

The second wire harness may be wound on the turntable and/or be configured to drive the turntable to rotate in the first direction in response to the second wire harness being extracted from the accommodating space. The first wire harness may be electrically connected to the second wire harness.

A plurality of elastic conductive members may be provided on one of the shell and the turntable, A plurality of coaxial annular copper sheets may be provided on the other one of the shell and the turntable and/or be maintained in contact with the plurality of elastic conductive members during rotation of the turntable. The first wire harness may be electrically connected to the second wire harness by the plurality of elastic conductive members and/or the plurality of annular copper sheets.

The elastic conductive members may be metallic elastic sheets or spring pins. The elastic device may be a coil spring or an elastic band.

According to another example, a data cable comprises: a shell; a turntable; a wire harness wound on the turntable and configured to drive the turntable to rotate in a first direction; an elastic device connected to the shell and the turntable, wherein the elastic device is configured to drive the turntable to rotate in a second direction opposite to the first direction; and a switch, wherein the switch is configured to lock the turntable in response to release of the wire harness after being extracted from a first position that the wire harness is completely wound on the turntable, and unlock the turntable to rotate in the second direction in response to release of the wire harness after being extracted from a second position that the wire harness is partially wound on the turntable. The data cable may further comprise a connector located at one end of the wire harness.

According to another example, an electronic device may comprise: a data cable comprising: a shell;
a turntable; a wire harness wound on the turntable and configured to drive the turntable to rotate in a first direction; an elastic device connected to the shell and the turntable, wherein the elastic device is configured to drive the turntable to rotate in a second direction opposite to the first direction; and a switch, wherein the switch is configured to lock the turntable in response to release of the wire harness after being extracted from a first position that the wire harness is completely wound on the turntable, and unlock the turntable to rotate in the second direction in response to release of the wire harness after being extracted from a second position that the wire harness is partially wound on the turntable.

According to another example, a data cable may comprise a shell having an accommodating space;
a turntable rotatably arranged in the accommodating space; a connecting wire comprising a wire harness and a connecting joint located at least at one end of the wire harness, wherein the wire harness is wound on the turntable and connected to the turntable, the connecting joint is located outside the accommodating space, and the wire harness is configured to drive the turntable to rotate in a first direction when being extracted from the accommodating space; a first elastic member located in the accommodating space, wherein two ends of the first elastic member are connected to the shell and the turntable respectively, and the first elastic member is used for driving the turntable to rotate in a second direction opposite to the first direction when the extracted wire harness is released, so that the extracted wire harness is rewound on the turntable; and a limit assembly located in the accommodating space, wherein the limit assembly is used for limiting the turntable from rotating in the second direction when the wire harness is initially extracted and released to maintain the wire harness in the extracted state, and for removing the limiting on the rotation of the turntable when the wire harness is extracted and released again, so that the turntable can rotate in the second direction and the extracted wire harness is rewound on the turntable; wherein the initial extraction refers to the extraction of the wire harness when completely wound on the turntable.

Additionally or alternatively, the limit assembly may comprise a self-locking switch, which is configured to be in an unlocked state when initially pressed and released and in a self-locking state when pressed and released again.

According to an example, a data cable may comprise: a shell, a turntable, and a wire harness (e.g., cable harness) wound on the turntable and configured to drive the turntable to rotate in a first direction. The data cable further comprises an elastic device connected to the shell and the turntable. The elastic device is configured to drive the turntable to rotate in a second direction opposite to the first direction. The data cable further comprises a limit assembly that is configured to lock the turntable in response to release of the wire harness after being extracted from a first position that the wire harness is completely wound on the turntable, and unlock the turntable to rotate in the second direction in response to release of the wire harness after being extracted from a second position that the wire harness is partially wound on the turntable. For example, the turntable comprises an annular wall, and a plurality of clamping grooves are provided circumferentially on the inner side of the annular wall. The limit assembly comprises a clamping member (e.g., a clamp), and the clamping member is rotatably arranged on the shell and matches the clamping groove; and the clamping member is configured to clamp the clamping groove when the wire harness is initially extracted and released to limit the turntable from rotating in the second direction, and to separate from the clamping groove when the wire harness is extracted and released again to remove the limiting on the rotation of the turntable in the second direction. For example, the limit assembly comprises a self-locking switch, and the self-locking switch is configured to be in an unlocked state when initially pressed and released and in a self-locking state when pressed and released again, where the self-locking switch in the unlocked state can push the clamping member to clamp the clamping groove, and the self-locking switch in the self-locking state no longer pushes the clamping member to clamp the clamping groove. The clamping member is configured to press the self-locking switch when the wire harness is initially extracted and extracted again.

The self-locking switch may comprise a chute, a slider, a limit rod, and a second elastic member (e.g., device). The chute may be used for accommodating the slider, the slider can switch between an extension position of extending to the outside of the chute and a storage position of being accommodated in the chute, and the slider in the extension position can push the clamping member to clamp the clamping groove.

A one-way slide may be provided on the slider, a first end of the limit rod is connected to the shell, and a second end of the limit rod is located in the one-way slide and can slide along the one-way slide, to switch between a first position, a second position, a third position, a fourth position, and a first position in the slide sequentially.

The second elastic member may abut against the slider to push the slider to move towards the extension position. When the second end of the limit rod is in the first position, the limit rod clamps the slide to maintain the slider in the storage position; when the second end of the limit rod is in the second position and the fourth position, the slider is in the storage position; when the second end of the limit rod is in the third position, the slider remains in the extension position. When the wire harness is initially extracted and extracted again, the clamping member may press the slider into the chute, so that the second end of the limit rod moves from the first position and the third position to the second position and the fourth position respectively. When the wire harness is initially released and released again, the second elastic member may push the slider out of the chute, so that the second end of the limit rod moves from the first position and the third position to the fourth position and the second position respectively.

For example, the clamping member may comprise a first clamping portion, a second clamping portion, and a contact portion arranged circumferentially; the first clamping portion and the second clamping portion may be used for clamping the clamping groove and the slider respectively, and the contact portion may be used for being in contact with the slider.

When the wire harness is initially extracted and extracted again, the annular wall may push the clamping member to rotate in the first direction through the first clamping portion, so that the contact portion presses the slider into the chute; and when the wire harness is initially released, the contact portion may be driven by the slider to push the clamping member to rotate in the second direction, so that the first clamping portion clamps the clamping groove, and the second clamping portion may clamp the slider, where the slider may be used for limiting the second clamping portion from rotating in the second direction.

For example, the connecting wire may comprise a first connecting joint and a second connecting joint, the wire harness may comprise a first wire harness and a second wire harness, two ends of the first wire harness may be connected to the first connecting joint and the shell respectively, two ends of the second wire harness may be connected to the second connecting joint and the turntable respectively, the second wire harness may be wound on the turntable and configured to drive the turntable to rotate in the first direction when being extracted from the accommodating space, and the first wire harness may be electrically connected to the second wire harness.

For example, a plurality of elastic conductive members may be provided on one of the shell and the turntable, a plurality of coaxial annular conductive portions may be provided on the other, the plurality of elastic conductive members may be maintained in contact with the plurality of annular conductive portions during the rotation of the turntable, and the first wire harness may be electrically connected to the second wire harness by the plurality of elastic conductive members and the plurality of annular conductive portions. For example, the elastic conductive members may be metallic elastic sheets or spring pins; and the annular conductive portions may be annular copper sheets.

For example, the first elastic device may be a coil spring.

An example of the present application may provide an electronic device, including the data cable as described above.

According to the data cable and electronic device of the present application, the limit assembly can maintain the wire harness in the extracted state when the wire harness is initially extracted and released, which facilitates user's use. In addition, the first elastic device can allow the extracted wire harness to be rewound on the turntable when the wire harness is extracted and released again, thereby achieving the storage of the wire harness, reducing the space occupied by the wire harness, and making the data cable less prone to tangling and easy to carry.

### Brief description of the drawings

The following accompanying drawings of the present application hereby serve as a part of the present application for understanding the present application. The accompanying drawings illustrate examples of the present application and descriptions thereof for explaining the device and principle of the present application.
- FIG. 1: is a schematic view of an overall structure of a data cable according to an example of the present application;
- FIG. 2: is an exploded view of the data cable in FIG. 1;
- FIG. 3: is an exploded view of the data cable in FIG. 2;
- FIG. 4: is a schematic view of a three-dimensional structure of a clamping member in FIG. 3;
- FIG. 5: is a schematic view of a three-dimensional structure of a slider in FIG. 3;
- FIG. 6: is a cross-sectional view of the data cable in FIG. 1 when a second wire harness is not extracted (e.g., when the wire harness is released again);
- FIG. 7: is a cross-sectional view of the data cable in FIG. 1 when the second wire harness is initially extracted;
- FIG. 8: is a cross-sectional view of the data cable in FIG. 1 when the second wire harness is initially released; and
- FIG. 9: is a cross-sectional view of the data cable in FIG. 1 when the second wire harness is extracted again.

### List of references

100 - shell, 110 - bottom shell, 111 - rotating shaft, 121 - upper cover, 122 - first connecting plate,
123 - elastic conductive member;
210 - turntable body, 211 - annular wall, 212 - clamping groove, 213 - wire hole, 220 - second connecting plate, 221 - annular conductive portion;
300 - connecting wire, 310 - first wire harness, 320 - second wire harness, 330 - first connecting joint, 340 - second connecting joint, 350 - decorative member;
410 - coil spring, 420 - coil spring cover plate;
510 - clamping member, 511 - through hole, 512 - first clamping portion, 513 - second clamping portion, 514 - contact portion,
520 - screw, 530 - torsion spring, 540 - chute, 550 - slider, 551 - slide, 560 - limit rod, 570 - spring,
580 - chute cover plate;
A - first position, B - second position, C - third position, D - fourth position.

### Detailed description

In the following description, specific details and examples are included to provide a more thorough understanding of the present application. In some examples, in order to avoid confusion with the present application, some well-known technical features in this art are not described.

It should be understood that the present application can be implemented in different forms and should not be interpreted as limited to the examples provided herein. On the contrary, providing these examples will make the disclosure thorough and complete, and fully convey the scope of the present application to those skilled in the art. In the accompanying drawings, the dimensions and relative sizes of layers and regions may be exaggerated for clarity. The same reference numerals throughout indicate the same elements.

It should be understood that, although the terms first, second, third, etc. may be used for describing various elements, components, regions, layers, and/or portions, these elements, components, regions, layers, and/or portions should not be restricted by these terms. These terms are only used for distinguishing one element, component, region, layer, or portion from another element, component, region, layer, or portion. Therefore, the first element, component, region, layer or portion discussed below may be represented as a second element, component, region, layer or portion, without departing from the teachings of the present application.

Spatial relationship terms such as "under", "below", "lower", "beneath", "above", "upper", etc. may be used here to conveniently describe the relationship between one element or feature shown in the figure and another element or feature. Understandably, in addition to the orientations shown in the figures, the spatial relationship terms also include different orientations of devices in use and operation.

The terms used here are only intended to describe specific examples and not to serve as limitations of the present application. When used here, the singular forms of "a", "an", and "said/the" also include plural forms, unless the context clearly indicates otherwise. It should also be understood that the terms "compose" and/or "include", when used in the description, determine the presence of the described features, integers, operations, elements, and/or components, but do not exclude the presence or addition of one or more other features, integers, operations, elements, components, and/or groups. When used here, the term "and/or" includes any and all combinations of the listed items.

Some examples of the present application may be described here with reference to cross-sectional views as schematic views of examples (and intermediate structures) of the present application. As such, changes in shapes shown due to, for example, manufacturing technology and/or tolerance can be desired. Therefore, the examples of the present application should not be limited to the specific shapes shown here, but include shape deviations due to, for example, manufacturing. Therefore, the shapes shown in the figures are substantially schematic, and the shapes may not represent the actual shapes of devices, and do not limit the scope of the present application.

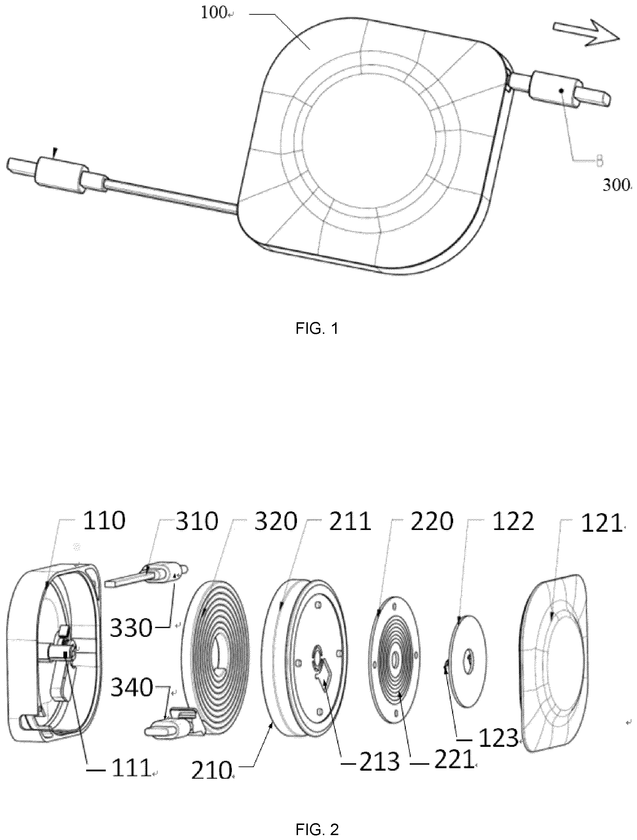

FIGs. 1-9 illustrate a data cable according to an example of the present application. The data cable comprises a shell 100, a turntable, a connecting wire 300 (e.g., wire harness, cable harness), a coil spring 410, and a limit assembly.

The shell 100 has an accommodating space used for accommodating the turntable, the coil spring 410, and the limit assembly. With reference to FIG. 2, in an example of the present application, the shell 100 comprises a bottom shell 110 and an upper cover 121. The bottom shell 110 is fixedly or detachably connected to the upper cover 121, and the accommodating space is formed between the bottom shell 110 and the upper cover 121. The upper cover 121 comprises an upper cover body and a first connecting plate 122, the upper cover body and the bottom shell 110 are fixedly connected by adhesion or detachably connected by screws. The first connecting plate 122 is located on the side of the upper cover body and can be fixed to the upper cover body by adhesion or screw connection. A plurality of elastic conductive members 123 are provided on the side of the first connecting plate 122 facing the bottom shell 110. In other examples, the first connecting plate 122 may not be provided in the shell 100, but the plurality of elastic conductive members 123 are directly provided on the side of the upper cover body facing the bottom shell 110.

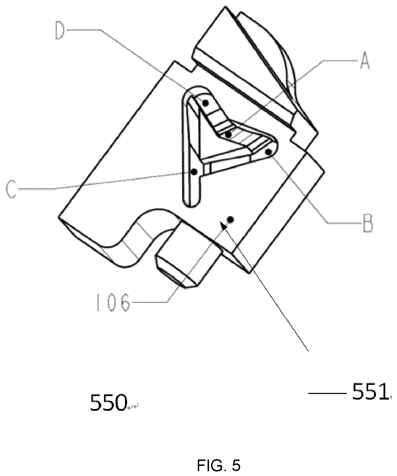

The turntable is rotatably arranged in the accommodating space and configured to be rotatable in a first direction and a second direction opposite to the first direction, where the first direction and the second direction may be a clockwise direction and a counterclockwise direction in FIG. 5, respectively. With reference to FIG. 2, in an example of the present application, a rotating shaft 111 is provided at a middle portion of the shell 100. The turntable comprises a turntable body 210 and a second connecting plate 220. The second connecting plate 220 may be fixed to the side of the turntable body 210 facing the upper cover 121 by adhesion or screw connection. Shaft holes matching the rotating shaft 111 are provided at middle portions of the turntable body 210 and the second connecting plate 220. The rotating shaft 111 passes through the shaft holes, and the turntable can rotate around the rotating shaft 111 in the clockwise direction and the counterclockwise direction.

With reference to FIG. 2, in an example of the present application, the connecting wire 300 comprises a first wire harness 310, a second wire harness 320, a first connecting joint 330, and a second connecting joint 340. The first connecting joint 330 and the second connecting joint 340 are located outside the shell 100 and may be USB connectors, TYPE-C connectors, or Lightning connectors, which can be configured by those skilled in the art as needed. Two ends of the first wire harness 310 are connected to the first connecting joint 330 and the shell 100 respectively, two ends of the second wire harness 320 are connected to the second connecting joint 340 and the turntable. The shell 100 is provided with wire holes corresponding to the first wire harness 310 and the second wire harness 320, the first wire harness 310 and the second wire harness 320 pass through the corresponding wire holes respectively, and the first wire harness 310 is electrically connected to the second wire harness 320. Specifically, the end of the first wire harness 310 away from the first connecting joint 330 may be connected to the first connecting plate 122 by welding and electrically connected to the plurality of elastic conductive members 123. The first wire harness 310 comprises a plurality of wire cores, each of which is connected to an elastic conductive member 123. The elastic conductive members 123 may be metallic elastic sheets, spring pins, or other suitable elastic members capable of conducting electricity. The turntable body 210 is provided with a wire hole 213. The end of the second wire harness 320 away from the second connecting joint 340 may be connected to the second connecting plate 220 through the wire hole 213 by welding. The second connecting plate 220 is provided with a plurality of coaxial annular conductive portions 221. The central axis of the annular conductive portions is the same as that of the rotating shaft 111 on the bottom shell 110, and the second wire harness 320 is electrically connected to the plurality of annular conductive portions 221. The second wire harness 320 comprises a plurality of wire cores, each of which is connected to an annular conductive portion 221, and the annular conductive portions 221 may be annular copper sheets or other annular conductive metal sheets. During the rotation of the turntable, the plurality of elastic conductive members 123 are in contact with the plurality of annular conductive portions 221, so that the first wire harness 310 and the second wire harness 320 are in conductive connection through the elastic conductive members 123 and the annular conductive portions 221 during the rotation of the turntable. In other examples, the plurality of annular conductive portions 221 connected to the first wire harness 310 may be provided on the first connecting plate 122, and the plurality of elastic conductive members 123 connected to the second wire harness 320 may be provided on the second connecting plate 220. In other examples, the turntable may comprise only the turntable body 210 and may not include the second connecting plate 220, and the annular conductive portions 221; or the elastic conductive members 123 are provided on the side of the turntable body 210 facing the upper cover 121.

With reference to FIG. 2, in an example of the present application, the second wire harness 320 is wound on the turntable body 210 from inside to outside in the first direction with the rotating shaft 111 as a center. Because the end of the second wire harness 320 away from the second connecting joint 340 is fixed to the second connecting plate 220 of the turntable, when the wound second wire harness 320 is extracted from the accommodating space, the second wire harness 320 can drive the turntable to rotate in the first direction. The data cable may further comprise a decorative member 350, the second wire harness 320 passes through the decorative member 350, and the decorative member 350 is detachably fixed to the shell 100 and located at the wire hole of the shell 100 corresponding to the second wire harness 320.

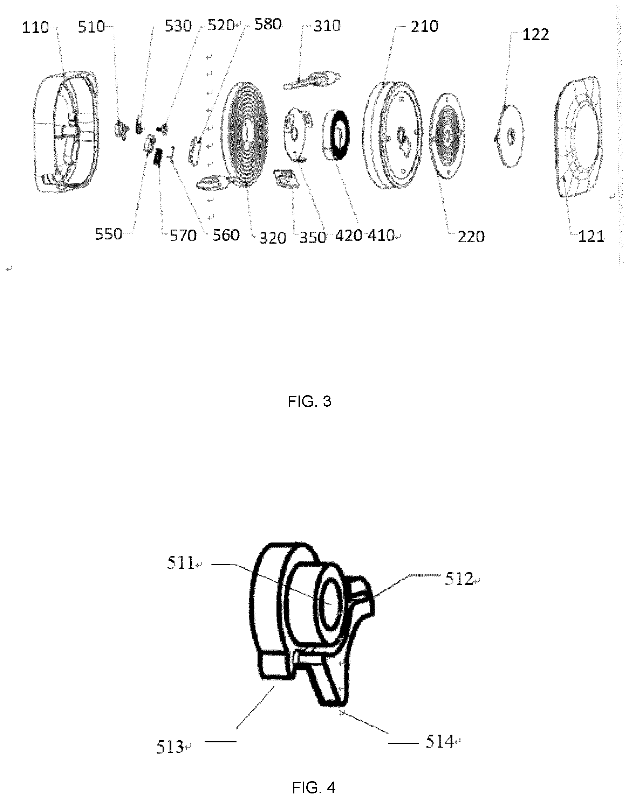

With reference to FIG. 3, in an example of the present application, the coil spring 410 is located in the accommodating space, and two ends of the coil spring 410 are connected to the shell 100 and the turntable respectively. Specifically, the coil spring 410 is fixed to the bottom shell 110 through a coil spring cover plate 420 in a stretchable manner. A first end of the coil spring 410 (e.g., the end inside the coil spring 410) may be fixed to the rotating shaft 111 of the bottom shell 110 by clamping, and a second end of the coil spring 410 (e.g., the end outside the coil spring 410) may be fixed to the turntable body 210 by clamping. When the second wire harness 320 is extracted from the accommodating space and the second wire harness 320 drives the turntable to rotate in the first direction, the turntable body 210 drives the second end of the coil spring 410 to move, so that the coil spring 410 is in a stretched state. When the extracted second wire harness 320 is released, the coil spring 410 can drive the turntable body 210 to rotate in the second direction opposite to the first direction through its elasticity, so that the extracted second wire harness 320 is rewound on the turntable. After the extracted second wire harness 320 is rewound on the turntable, the second wire harness 320 returns to its initial state of being completely wound on the turntable. In other examples, the coil spring 410 may be replaced with an elastic band or other suitable elastic member (e.g., device) that can drive the turntable to rotate in the second direction through its elasticity.

A limit assembly may be located in the accommodating space, and the limit assembly is configured to limit the turntable from rotating in the second direction when the second wire harness 320 is initially extracted and released, so as to maintain the second wire harness 320 in the extracted state. When the second wire harness 320 is extracted and released again, the limiting on the rotation of the turntable is removed (e.g., the limit assembly allows the rotation of the turntable), and the turntable can rotate in the second direction under the drive of the coil spring 410, so that the extracted second wire harness 320 is rewound on the turntable. It should be noted that the initial extraction referred to here is the extraction of the second wire harness 320 when completely wound on the turntable. When the extracted second wire harness 320 is rewound on the turntable, the second wire harness 320 returns to the initial state of being completely wound on the turntable. In this case, re-extracting the second wire harness 320 is regarded as the initial extraction. When the second wire harness 320 is continuously extracted and released in a case that the second wire harness 320 is completely wound on the turntable, the first extraction and release is the initial extraction and release, and the second wire harness 320 remains in the extracted state; the second extraction and release is re-extraction and release, and the extracted second wire harness 320 is rewound on the turntable; the third extraction and release is the initial extraction and release, and the second wire harness 320 remains in the extracted state; the fourth extraction and release is re-extraction and release, the extracted second wire harness 320 is rewound on the turntable, and so on.

When a user needs to use the data cable, the user only needs to initially extract the second wire harness 320 completely wound on the turntable to a required length and release the same, the second wire harness 320 can remain in the extracted state, and the user can conveniently use the extracted data cable for charging or data transmission. When the user does not need to use the data cable, the user only needs to extract and release the data cable again, the extracted second wire harness 320 can be automatically wound on the turntable, returns to the initial state of being completely wound on the turntable, and is stored in the shell 100, thereby conveniently achieving the storage of the second wire harness 320, reducing the space occupied by the second wire harness 320, and making the data cable less prone to tangling and easy to carry. Therefore, it is convenient for the user to use the data cable of the example of the present application, the service life of the data cable can be prolonged, and damage to the data cable can be reduced.

With reference to FIGs. 2-8, in an example of the present application, the turntable body 210 is provided with an annular wall 211 circumferentially, and a plurality of clamping grooves 212 are provided (e.g., uniformly provided) circumferentially on the inner side of the annular wall 211 (e.g., the side of the annular wall 211 facing the rotating shaft 111). The limit assembly comprises a clamping member 510 (e.g., a clamp), and the clamping member510 is rotatably arranged on the shell 100 and matches the clamping groove 212 (e.g., each of the plurality of clamping grooves 212). The clamping member 510 is rotatably connected to the bottom shell 110 by a screw 520 and provided with a through hole 511, the screw 520 passes through the through hole 511 and meshes with a screw slot on the bottom shell 110 to limit the clamping member 510 to the bottom shell 110, and the clamping member 510 can rotate around the screw 520 to clamp or separate from the clamping groove 212. The clamping member 510 is configured to clamp the clamping groove 212 when the wire harness is initially extracted and released to limit the turntable from rotating in the second direction, and to separate from the clamping groove 212 when the wire harness is extracted and released again to remove the limiting on the rotation of the turntable in the second direction. The turntable, when rotating in the first direction, is configured to drive the clamping member 510 to rotate in the first direction, so that the clamping member 510 and the clamping groove 212 in the clamping state separate from each other. Therefore, by controlling the rotation of the clamping member 510, the rotation of the turntable can be controlled, thereby maintaining the second wire harness 320 in the extracted state or wound on the turntable.

The limit assembly may further comprise a self-locking switch, and the self-locking switch is configured to be in an unlocked state when initially pressed and released and in a self-locking state when pressed and released again, where the self-locking switch in the unlocked state can push (e.g., control) the clamping member 510 to clamp the clamping groove 212 to limit the turntable from rotating in the second direction, so that the extracted second wire harness 320 remains in the extracted state. The clamping member 510 in the self-locking state no longer pushes the clamping member 510 to clamp the clamping groove 212, and the coil spring 410 can drive the turntable to rotate in the second direction through its elasticity, so that the extracted second wire harness 320 is rewound on the turntable. The clamping member 510 is configured to press the self-locking switch when the wire harness is initially extracted and extracted again. The clamping member 510 may be configured to rotate in the first direction under the drive of the turntable when the turntable rotates in the first direction (e.g., when the wire harness is initially extracted and extracted again), come into contact with the self-locking switch, and press the self-locking switch.

Specifically, the self-locking switch may comprise a chute 540, a slider 550 (e.g., a sliding block), a limit rod 560, a spring 570, and a chute cover plate 580. The chute 540 is arranged on the bottom shell 110 to accommodate the slider 550. The side of the chute 540 facing the clamping member 510 is open, and the slider 550 can extend to the outside of the chute 540 through the opening. The slider 550 can switch between an extension position of extending to the outside of the chute 540 and a storage position of being accommodated in the chute 540, and the slider 550 in the extension position can push the clamping member 510 to clamp the clamping groove 212. A one-way slide 551 is provided on the side of the slider 550 facing the upper cover 121, and the one-way slide 551 has a first position A, a second position B, a third position C, and a fourth position D. A first sliding segment, a second sliding segment, a third sliding segment, and a fourth sliding segment are respectively formed between the first position A and the second position B, between the second position B and the third position C, between the third position C and the fourth position D, and between the fourth position D and the first position A, where the first sliding segment and the fourth sliding segment are in a V-shape as a whole, and the opening of the V-shape faces the opening of the chute 540 (e.g., faces the clamping member 510). The second sliding segment and the third sliding segment are also in a V-shape as a whole, the opening of the V-shape also faces the opening of the chute 540, and the angle between the second sliding segment and the third sliding segment is smaller than that between the first sliding segment and the fourth sliding segment.

The limit rod 560 may be in a right-angled U-shape. The cross-section of the limit rod 560 in its extension direction is circular. A first end of the limit rod 560 is inserted into an insertion hole at the bottom of the chute 540 and rotatably connected to the bottom shell 110, and the insertion hole is located on the side of the slider 550 away from the clamping member 510. A second end of the limit rod 560 is inserted into the one-way slide 551 and can slide along the one-way slide 551 to switch between the first position A, the second position B, the third position C, the fourth position D, and the first position A in the slide 551 sequentially. The width of the slide 551 is slightly greater than the diameter of the second end of the limit rod 560. Steps may be provided at the first position A, the second position B, the third position C, and the fourth position D to prevent the second end of the limit rod 560 from moving reversely.

The spring 570 is located in the chute 540, one end of the spring 570 abuts against the end of the chute 540 away from the opening, and the other end abuts against the slider 550 to push the slider 550 to move towards the extension position. The spring 570 may be replaced with an elastic member capable of pushing the slider 550 to move towards the extension position, such as a metallic elastic sheet. The chute cover plate 250 may be connected to the side of the chute 540 away from the bottom shell 110 by adhesion, so that the slider 550, the limit rod 560, and the spring 570 are held between the chute cover plate 580 and the bottom shell 110, and the limit rod 560 does not separate from the slide 551. When the second end of the limit rod 560 is in the first position A, the limit rod 560 clamps the slide 551 (e.g., abuts against the junction of the V-shaped first sliding segment and fourth sliding segment), to maintain the slider 550 in the storage position. When the second end of the limit rod 560 is in the second position B and the fourth position D, the slider 550 is in the storage position. When the second end of the limit rod 560 is in the third position C, the spring 570 pushes the slider 550 to remain in the extension position, and the opening of the chute 540 can be in contact with a stop portion provided at an edge of the slider 550 to limit the slider from further leaving the chute 540.

With reference to FIG. 4, the clamping member 510 may comprise a first clamping portion 512, a second clamping portion 513, and a contact portion 514 arranged circumferentially, where the first clamping portion 512, the second clamping portion 513, and the contact portion 514 are all protruding portions of the clamping member 510. The first clamping portion 512 and the second clamping portion 513 are used for clamping the clamping groove 212 and the slider 550 respectively, and the contact portion 514 is used for being in contact with the slider 550.

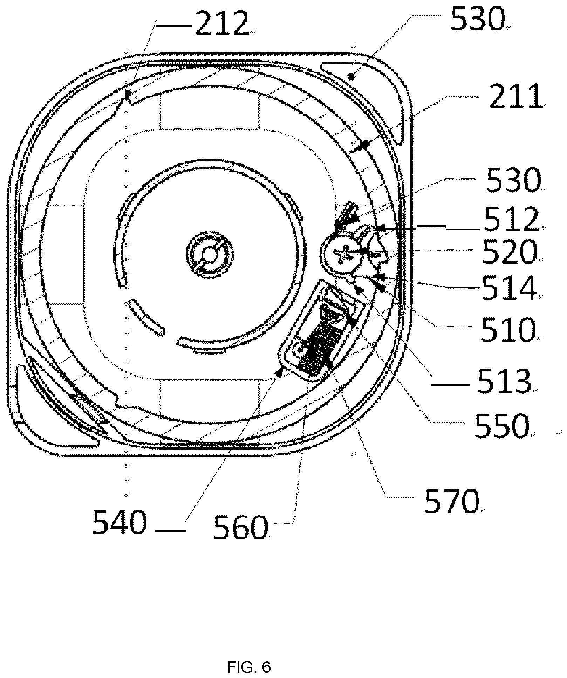

The working principle of the limit assembly in the present application will be explained with reference to FIGs. 6-9.

With reference to FIG. 6, when the second wire harness 320 is completely wound on the turntable and not extracted, the second end of the limit rod 560 is in the first position A, and the second end of the limit rod 560 clamps the slide 551 to limit the slider 550 from moving out of the chute 540, so that the slider 550 remains in the storage position.

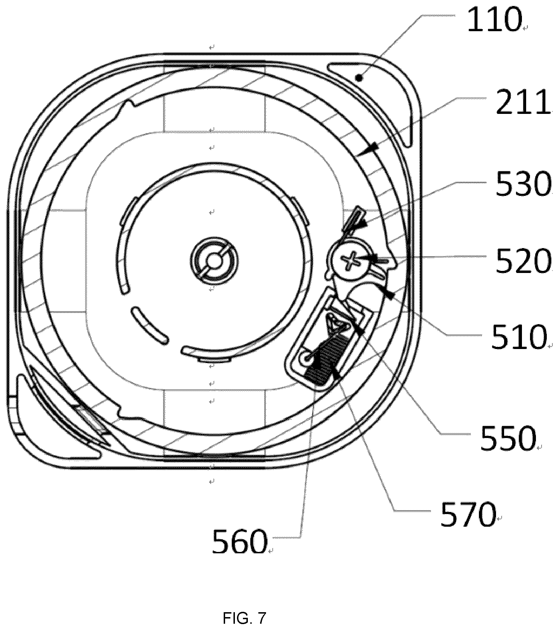

With reference to FIG. 7, when the second wire harness 320 is initially extracted, the annular wall 211 rotates in the first direction (e.g., the clockwise direction in FIGs. 6-9), the clamping groove 212 on the annular wall 211 is in contact with the first clamping portion 512, the clamping member 510 is pushed to rotate in the first direction through the first clamping portion 512, the contact portion 514 presses the slider 550 into the chute 540, the slider 550 moves into the chute 540, and in this process, the second end of the limit rod 560 moves from the first position A to the second position B. A guide slope is provided on the side of the slider 550 facing the clamping member 510, and the guide slope is used for being in contact with the contact portion 514 to better push the slider 550 to move into the chute 540.

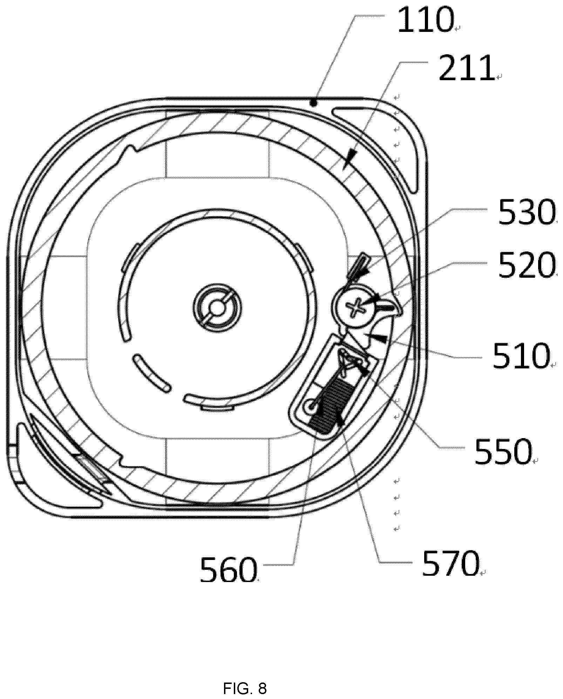

With reference to FIG. 8, when the second wire harness 320 is initially released, the coil spring 410 drives the turntable to rotate in the second direction (e.g., the counterclockwise direction in FIGs. 6-9) through its elasticity, the spring 570 pushes the slider 550 to move out of the chute 540, the second end of the limit rod 560 moves from the second position B to the third position C, and the slider 550 is in an extension state. The slider 550 pushes the clamping member 510 to move in the second direction through the contact portion 514 during movement, so that the first clamping portion 512 clamps the clamping groove 212, and the second clamping portion 513 clamps the slider 550. After the first clamping portion 512 clamps the clamping groove 212, the turntable is limited from rotating in the second direction. After the second clamping portion 513 clamps the slider 550, the slider 550 limits the second clamping portion 513 from rotating in the second direction, so that the first clamping portion 512 may not rotate in the second direction under the drive of the coil spring 410 and the turntable after clamping the clamping groove 212, then the first clamping portion 512 can continue to clamp the clamping groove 212 to continuously limit the turntable from rotating in the second direction, and the extracted second wire harness 320 remains in the extracted state.

The limit assembly may further comprise a torsion spring 530 that is sleeved on the clamping member 510. One end of the torsion spring 530 abuts against the bottom shell 110, and the other end of the torsion spring abuts against the clamping member 510. The torsion spring 530 is used for allowing, through its elasticity, the clamping member 510 to tend to remain in the position when the first clamping portion 512 clamps the clamping groove 212, so that the slider 550 in the extension position can better push the clamping member 510 to clamp the clamping groove 212, Notably, when the slider 550 is in the storage position, regardless of whether the turntable rotates in the first or second direction, the torsion spring 530 does not limit the rotation of the turntable.

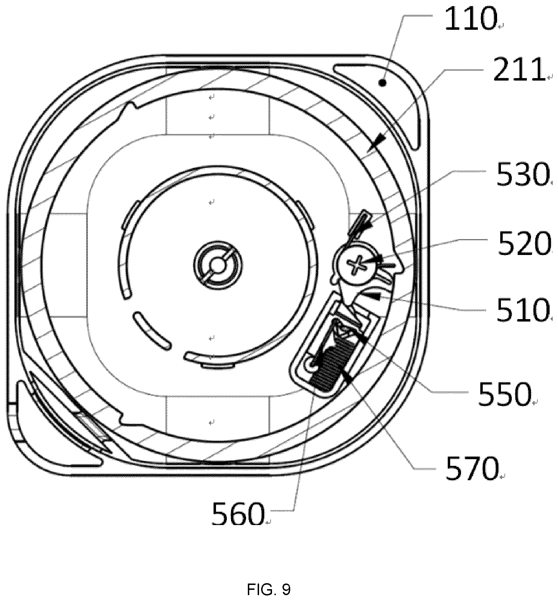

With reference to FIG. 9, when the second wire harness 320 is extracted again, the annular wall 211 rotates in the first direction, the annular wall 211 pushes the clamping member 510 to rotate in the first direction through the first clamping portion 512, the contact portion 514 presses the slider 550 into the chute 540, and the slider 550 moves into the chute 540. In this process, the second end of the limit rod 560 moves from the third position C to the fourth position D.

With reference to FIG. 6, when the second wire harness 320 is released again, the spring 570 pushes the slider 550 to move out of the chute 540, the second end of the limit rod 560 moves from the fourth position D to the first position A, and the second end of the limit rod 560 clamps the slide 551 to limit the slider 550 from moving out of the chute 540, so that the slider 550 remains in the storage position, and the slider 550 no longer limits the rotation of the clamping member 510. At this point, the coil spring 410 can drive the turntable to rotate in the second direction through its elasticity, the clamping member 510 can rotate in the second direction under the action of the torsion spring 530 and the turntable and separate from the slider 550, and the clamping member 510 no longer limits the rotation of the turntable. The extracted second wire harness 320 can be automatically wound on the turntable under the action of the coil spring 410 and stored in the shell 100, and returns to its initial state of being completely wound on the turntable for next extraction.

In some other examples, the self-locking switch comprises the chute 540, the slider 550, etc. may be replaced with other structural forms of self-locking switches, such as a self-locking switch corresponding to a button in a ballpoint pen that pops out (e.g., in an unlocked state) after initially pressed and released, and remains in a pressed state (e.g., in a self-locking state) after pressed and released again.

In some other examples, the first connecting plate 122 and the second connecting plate 220 may not be provided in the shell 100. Correspondingly, the connecting wire 300 may comprise an entire wire harness and two connecting joints located at two ends of the wire harness, the two connecting joints are both located outside the shell 100, the connecting wire 300 is wound on the turntable body 210 and fixedly connected to the turntable body 210, one of the connecting joints drives the turntable body 210 to rotate when being pulled, and the other connecting joint does not drive the turntable body 210 to rotate when being pulled.

In some other examples, the first wire harness 310 may not be connected to the first connecting joint 330, but is configured for being directly connected to a power supply device, such as a battery or charging control chip in a power bank.

The present application further provides an electronic device, including the data cable as described above. The electronic device may be, for example, a power bank or other power supply devices, where the first connecting joint 330 of the data cable may be used for being detachably connected to a charging interface on the electronic device, and the second connecting joint 330 of the data cable may be used for being connected to a device to be charged. In some examples, the first wire harness 310 of the data cable may not be connected to the first connecting joint 330, but directly connected to a battery or charging control chip in the electronic device by, for example, welding or other means.

Although exemplary examples are described here with reference to the accompanying drawings, it should be understood that the above exemplary examples are merely exemplary and are not intended to limit the scope of the present application. Those of ordinary skill in the art can make various changes and modifications without deviating from the scope and spirit of the present application. All these changes and modifications are intended to be included within the scope of the present application as claimed in the appended claims.

In the description provided here, a large number of specific details are explained. However, it can be understood that the examples of the present application can be practiced without these specific details. In some examples, well-known methods, structures, and technologies are not shown in detail to avoid blurring the understanding of the description.

Similarly, it should be understood that in order to simplify the present application and help understand one or more aspects of the present application, various features of the present application are sometimes grouped together into a single example, figure, or description thereof in the description of the exemplary examples of the present application. However, the method of the present application should not be interpreted as reflecting the intention that the protected present application requires more features than those explicitly stated in each claim.

Those skilled in the art can understand that, in addition to mutually exclusive features, any combination can be used to combine all features disclosed in the description (including accompanying claims, abstract, and drawings) and all processes or units of any method or device so disclosed. Unless otherwise explicitly stated, features disclosed in the description (including accompanying claims, abstract, and drawings) may be replaced by alternative features that provide the same, equivalent, or similar purpose.

In addition, those skilled in the art can understand that although some examples described herein include some features included in other examples rather than other features, the combination of features of different examples implies that they fall within the scope of the present application and form different examples. For example, in the claims, any one of the examples claimed for protection can be used in any combination.

It should be noted that the above examples illustrate the present application rather than limit the present application, and those skilled in the art can design alternative examples without departing from the scope of the appended claims.

## Claims

1. A data cable, comprising:
- a shell having an accommodating space;
- a turntable in the accommodating space;
- a connecting wire comprising a wire harness and a connector located at one end of the wire harness, wherein the wire harness is wound on the turntable, and the wire harness is configured to drive the turntable to rotate in a first direction in response to the wire harness being extracted from the accommodating space;
- an elastic device located in the accommodating space, wherein two ends of the elastic device are connected to the shell and the turntable respectively, and the elastic device is configured to drive the turntable to rotate in a second direction opposite to the first direction in response to release of the extracted wire harness; and
- a self-locking switch located in the accommodating space, wherein the self-locking switch is configured to prevent the turntable from rotating in the second direction when the wire harness is extracted from a first position that the wire harness is completely wound on the turntable and then released, and allow the turntable to rotate in the second direction when the wire harness is extracted from a second position that the wire harness is partially wound on the turntable and then released.

2. The data cable according to claim 1, wherein:
- the turntable comprises an annular wall and a plurality of clamping grooves, wherein the plurality of clamping grooves is provided circumferentially on an inner side of the annular wall, and the data cable further comprises:
- a clamp rotatably arranged on the shell, wherein:
- the clamp is configured to clamp one of the plurality of clamping grooves when the wire harness is extracted from the first position and released to prevent the turntable from rotating in the second direction, and to separate from the one of the plurality of clamping grooves when the wire harness is extracted and released again to allow rotation of the turntable in the second direction.

3. The data cable according to claim 2, wherein:
- the self-locking switch in the unlocked state is configured to control the clamp to clamp the one of the plurality of clamping grooves, and
- the self-locking switch in the self-locking state is configured to control the clamp to not clamp the one of the plurality of clamping grooves.

4. The data cable according to claim 2 or 3, wherein:
- the clamp comprises a first clamping portion, a second clamping portion, and a contact portion arranged circumferentially,
- the first clamping portion is configured to clamp each of the plurality of clamping grooves, and the second clamping portion is configured to clamp the slider, and the contact portion is in contact with a slider,
- when the wire harness is extracted from the second position, the annular wall pushes the clamp to rotate in the first direction through the first clamping portion, and
- when the wire harness is released from the second position, the contact portion is driven by the slider to push the clamp to rotate in the second direction.

5. The data cable according to any of the preceding claims, wherein the self-locking switch comprises a chute, a slider, a limit rod, and a second elastic device.

6. The data cable according to claim 5, wherein:
- the slider is configured to switch between an extension position of extending to outside of the chute and a storage position of being accommodated in the chute, and the slider in the extension position is configured to push the clamping member to clamp the one of the plurality of clamping grooves;
- the slider comprises a one-way slide,
- a first end of the limit rod is connected to the shell, and
- a second end of the limit rod is located in the one-way slide and is configured to slide along the one-way slide, to switch between a first position, a second position, a third position, a fourth position sequentially.

7. The data cable according to claim 6, wherein:
- the second elastic device is configured to abut against the slider to push the slider to move towards the extension position,
- when the second end of the limit rod is in the first position, the limit rod is configured to clamp the slide to maintain the slider in the storage position,
- when the second end of the limit rod is in the second position and the fourth position, the slider is in the storage position,
- when the second end of the limit rod is in the third position, the slider remains in the extension position, and
- when the wire harness is extracted from the second position, the clamp presses the slider into the chute, and
- when the wire harness is released after being extracted from the second position, the second elastic device pushes the slider out of the chute.

8. The data cable according to any of claims 5 to 7, wherein:
- the chute is arranged on the bottom shell,
- a side of the chute facing the clamping member is open, and
- the slider is configured to extend to the outside of the chute through the opening.

9. The data cable according to any of claims 6 to 8, wherein
- a width of the slide is greater than a diameter of the second end of the limit rod and/or
- the second elastic device is a spring and/or is configured to push the slider to move towards the extension position.

10. The data cable according to any of claims 5 to 9, wherein:
- the self-locking switch further comprises a chute cover plate, and
- the chute cover plate is connected to a side of the chute by adhesion.

11. The data cable according to any of the preceding claims, wherein the self-locking switch is configured to be in an unlocked state in response to being pressed and released, and in a self-locking state in response to being pressed and released again.

12. The data cable according to any of the preceding claims, wherein:
- the connecting wire comprises a first connecting joint and a second connecting joint,
- the wire harness comprises a first wire harness and a second wire harness,
- two ends of the first wire harness are connected to the first connecting joint and the shell respectively,
- two ends of the second wire harness are connected to the second connecting joint and the turntable respectively,
- the second wire harness is wound on the turntable and configured to drive the turntable to rotate in the first direction in response to the second wire harness being extracted from the accommodating space, and
- the first wire harness is electrically connected to the second wire harness.

13. The data cable according to claim 12, wherein:
- a plurality of elastic conductive members are provided on one of the shell and the turntable,
- a plurality of coaxial annular copper sheets are provided on the other one of the shell and the turntable and are maintained in contact with the plurality of elastic conductive members during rotation of the turntable, and
- the first wire harness is electrically connected to the second wire harness by the plurality of elastic conductive members and the plurality of annular copper sheets.

14. The data cable according to claim 13, wherein the elastic conductive members are metallic elastic sheets or spring pins.

15. The data cable according to any of the preceding claims, wherein the elastic device is a coil spring or an elastic band.
